# FASCICULE DE BREVET EUROPEEN

(11) **EP 3 150 451 B1**
(45) Date de publication et mention de la délivrance du brevet: **22.08.2018**
(21) Numéro de dépôt: 16186809.6
(22) Date de dépôt: 01.09.2016
(51) Int. Cl.: B60W 10/18, B60W 50/02, B60W 30/045, B62D 9/00, B60W 50/029

(54) **PROCEDE DE CONTROLE DE LA TRAJECTOIRE D'UN VEHICULE AVEC LES FREINS SANS COMMANDE DU VOLANT DE DIRECTION**
VERFAHREN ZUR KONTROLLE DER BEWEGUNGSBAHN EINES FAHRZEUGS MIT BREMSEN OHNE STEUERUNG DES LENKRADS
METHOD FOR CONTROLLING THE TRAJECTORY OF A VEHICLE USING THE BRAKES, WITHOUT CONTROLLING THE STEERING WHEEL

(30) Priorité: 01.10.2015 FR 1559330
(43) Date de publication de la demande: 05.04.2017
(73) Titulaire: PSA Automobiles SA, 78300 Poissy (FR)
(72) Inventeur: GIROD A PETIT LOUIS, Adrien, 78960 VOISINS LE BRETONNEUX (FR); VAILLANT, Samuel, 92360 MEUDON LA FORET (FR)

(56) Documents cités:
- EP-A2- 1 616 746
- DE-T5-112010 006 048
- FR-A1- 2 911 838
- FR-A1- 2 914 260

## Description

La présente invention concerne un procédé de contrôle de la trajectoire d'un véhicule automobile avec les freins des roues en l'absence de commande de la direction, ainsi qu'un véhicule automobile équipé de moyens mettant en oeuvre un tel procédé.

Les véhicules automobiles comportent généralement un système de direction comprenant un volant entraînant par une colonne de direction un boîtier situé à sa base, qui transmet de chaque côté du véhicule un mouvement transversal à une biellette équipée de rotules à ses extrémités. En particulier le boîtier peut comporter une crémaillère disposée transversalement.

Le train avant du véhicule comporte de chaque côté un porte-moyeu pouvant pivoter suivant un axe de pivot sensiblement vertical, disposé à proximité du centre de la roue, qui reçoit le mouvement transversal de la biellette pour faire pivoter cette roue autour de l'axe de pivot et assurer la direction.

Les systèmes de direction peuvent être équipés d'une assistance utilisant une énergie électrique ou hydraulique, qui délivre sur le boîtier de direction une partie du couple nécessaire pour le braquage des roues directrices, complétant celui fourni par le conducteur.

Par ailleurs les véhicules peuvent être équipés d'un système d'aide à la conduite pour le contrôle de trajectoire appelé « ESP » (Electronic Stability Program), possédant une source autonome de pression hydraulique, qui à partir d'une information sur la trajectoire suivie par le véhicule donnée par différents capteurs, comparée à celle demandée par le conducteur manoeuvrant le volant, agit de manière automatique sur certains freins de roue pour générer un moment de lacet autour de l'axe vertical passant par le sens de gravité du véhicule. On fait ainsi pivoter le véhicule afin de rétablir la trajectoire souhaitée si le système d'aide à la conduite constate une dérive. Le document DE 11 2010 006 048 T5 décrit un procédé de contrôle de la trajectoire d'un véhicule automobile tel que défini par le préambule de la revendication 1. En cas de défaillance du système de direction, notamment un blocage de cette direction, ou une panne de l'assistance venant par exemple de l'alimentation en courant d'une assistance électrique ou du système de contrôle électronique de cette assistance, un procédé de stabilisation du véhicule connu, présenté notamment par le document US-B2-7519464, utilise un système de contrôle de la trajectoire du type ESP pour assurer la direction du véhicule.

Un autre procédé connu de contrôle de trajectoire en cas de défaillance du système de direction, présenté notamment par le document FR-A1-2914260, comporte l'application sur le différentiel du train avant moteur du véhicule, d'un couple de freinage sur le côté intérieur du virage et d'un couple moteur sur le côté extérieur, pour générer sur les roues avant une différence de force longitudinale assurant la direction du véhicule.

Ces deux procédés délivrent des forces longitudinales qui génèrent un moment de lacet du véhicule autour de son centre de gravité, assurant une trajectoire du véhicule.

Cependant pour ces procédés, la géométrie particulière de la direction du véhicule peut générer aussi des couples sur le braquage de chaque roue avant entraînant une rotation du volant de direction s'il peut tourner, ce braquage s'additionnant au moment de lacet venant des forces longitudinales de freinage des roues.

Pour une direction autonome du véhicule assurée par le freinage des roues, les couples de braquage pouvant s'appliquer dans un sens ou dans l'autre, posent des problèmes s'ils ne sont pas connus de manière précise, et pris en compte dans les calculs.

En effet la géométrie de la direction du véhicule peut évoluer, en particulier dans le cas de changements de roues, par exemple en installant des pneumatiques prévus pour une saison avec des jantes comprenant des dimensions différentes.

Lors du contrôle de la trajectoire par le freinage, dans le cas d'une réaction du véhicule qui diffère de celle attendue, cet écart nécessite des boucles de correction du calculateur mettant en oeuvre les circuits hydrauliques de freinage présentant une dynamique lente. Le retard mis dans ces corrections peut rendre la trajectoire difficilement contrôlable, et entraîner des accidents.

La présente invention a notamment pour but d'éviter ces inconvénients de la technique antérieure.

Elle propose à cet effet un procédé de contrôle de la trajectoire d'un véhicule automobile en l'absence de commande du volant de direction, utilisant un système d'aide à la conduite effectuant un contrôle de la trajectoire à partir d'une action individuelle sur les freins de roue, ce procédé étant remarquable en ce qu'il calcule un moment de lacet à établir pour assurer la trajectoire du véhicule avec les freins, puis il applique un freinage de la roue avant intérieure au virage, et il constate l'effet de ce freinage sur la rotation du volant, afin d'établir ensuite le calcul du freinage de chaque roue assurant la trajectoire en prenant en compte la rotation du volant générée par ces freinages.

Un avantage de ce procédé de contrôle est qu'il donne après le freinage de la roue avant intérieure, une information sur le comportement réel de la direction avec ces freinages, et donc sur l'état du véhicule. Le procédé peut ensuite établir directement les pressions optimums de freinage des différentes roues prenant en compte la rotation du volant donnée par la géométrie réelle de la direction.

Le procédé de contrôle de la trajectoire selon l'invention peut de plus comporter une ou plusieurs des caractéristiques suivantes, qui peuvent être combinées entre elles.

Selon un premier mode de réalisation, le procédé applique en premier un freinage de la roue avant intérieure au virage donnant la totalité du moment de lacet demandé, dans la limite de l'adhérence des roues.

Dans ce cas au cours du freinage de la roue avant intérieure, si la rotation du volant de direction est dans le sens du virage à effectuer, alors il maintient sensiblement ce freinage, et si la rotation du volant est dans le sens opposé il réduit le freinage de la roue avant intérieure en transférant une partie de ce freinage sur la roue arrière intérieure.

Selon un deuxième mode de réalisation, le procédé applique en premier un freinage partiel maintenu constant pendant toute la régulation, de la roue arrière intérieure au virage, et en parallèle un niveau partiel de freinage de la roue avant intérieure, pour obtenir avec ces deux freinages au moins une partie du couple de lacet demandé.

Dans ce cas au cours du freinage des deux roues intérieures, si la rotation du volant de direction est dans le sens du virage à effectuer, il augmente le freinage de la roue avant intérieure pour obtenir la totalité du couple de lacet demandé, et si la rotation du volant est dans le sens opposé au-dessus d'un seuil par rapport à sa position initiale, alors il bascule le freinage de cette roue avant intérieure vers la roue avant extérieure au virage.

En complément si la rotation du volant est dans le sens opposé au virage en dessous du seuil, il augmente le freinage de la roue avant intérieure pour obtenir la trajectoire.

Avantageusement, le procédé enregistre dans une mémoire les valeurs de rotation du volant de direction obtenues avec les différents freinages. Dans ce cas lors des contrôles de trajectoire suivants il dispose d'une base permettant d'obtenir plus rapidement les bons niveaux de freinage.

L'invention a aussi pour objet un véhicule automobile équipé de moyens mettant en oeuvre un procédé de contrôle de la trajectoire en l'absence de commande du volant de direction, utilisant un système d'aide à la conduite effectuant un contrôle de la trajectoire à partir d'une action individuelle sur les freins de roue, ce véhicule étant remarquable en ce que le procédé de contrôle comporte l'une quelconque des caractéristiques précédentes.

L'invention sera mieux comprise et d'autres caractéristiques et avantages apparaîtront plus clairement à la lecture de la description ci-après donnée à titre d'exemple, en référence aux dessins annexés dans lesquels :
- la figure 1 est un schéma synoptique d'un système d'aide à la conduite pour le contrôle de la trajectoire du véhicule avec les freins de roue ;
- la figure 2 présente sur un schéma vu de dessus les efforts sur le véhicule généré par les freinages des roues intérieures, ne prenant pas en compte les effets sur la direction ;
- la figure 3 est un schéma de la roue avant droite vue de l'arrière, présentant le déport au sol du pivot de roue par rapport à l'axe vertical de cette roue ;
- la figure 4 est un schéma de la roue avant droite vu de dessus, présentant les bras de levier de la géométrie de la direction ;
- la figure 5 présente les efforts sur le véhicule générés par un freinage d'une roue avant intérieure, comprenant les effets sur la direction ; et
- la figure 6 présente les efforts sur le véhicule générés par un freinage des roues avant et arrière intérieures, comprenant les effets sur la direction.

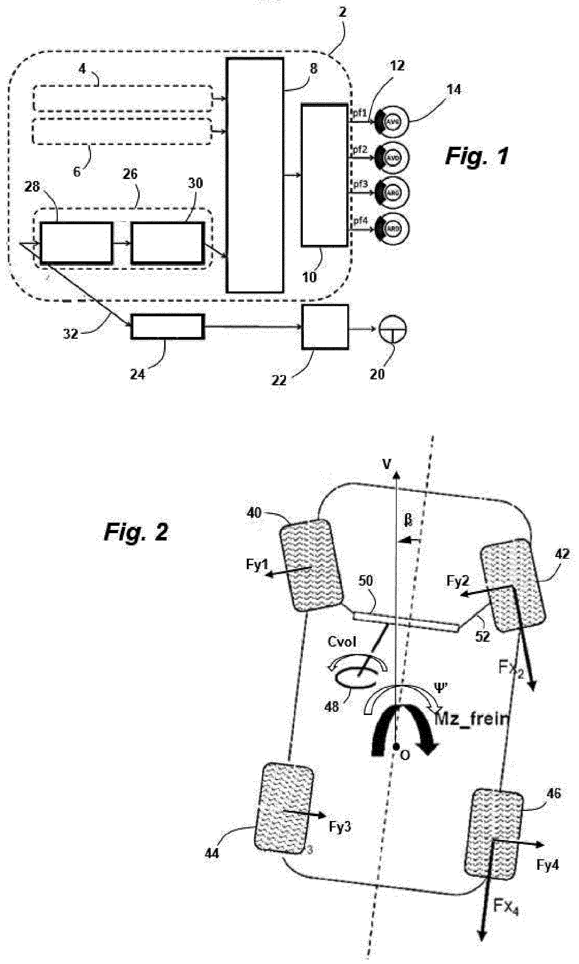

La figure 1 présente un système d'aide à la conduite comportant un système de contrôle de trajectoire du véhicule 2, comprenant une première fonction d'antiblocage des freins « ABS » 4 (Anti-lock Braking System) et une deuxième fonction de contrôle de stabilité du véhicule « ESP » 6 (Electronic Stability Program), qui sont en relation avec une fonction d'arbitrage 8 contrôlant les différentes accélérations du véhicule et réalisant les arbitrages.

Suivant les besoins du véhicule, notamment pour éviter un blocage des roues ou une déviation de trajectoire, la fonction d'arbitrage 8 envoie des consignes de freinage individuel de chaque roue à une fonction bas niveau 10, qui délivre à partir d'une pompe hydraulique une pression individuelle 12 sur chaque frein de roue 14.

Un volant de direction 20 équipé d'une assistance 22 qui peut être électrique ou hydraulique, comporte un capteur d'angle volant 24.

Lors d'une défaillance de la commande de direction 20 venant par exemple d'une panne de son assistance 22, comme un défaut d'un capteur ou de la fourniture d'énergie, une fonction de mode de défaillance 26 du système de contrôle de trajectoire 2 échange des informations 32 avec le système de direction pour appliquer un contrôle de trajectoire.

En variante le contrôle de trajectoire peut être aussi appliqué sur un véhicule à conduite autonome en cas de défaillance de la commande de direction.

Dans ce cas la fonction mode de défaillance 26 calcule alors un moment de lacet à établir pour assurer la trajectoire du véhicule, qu'il délivre à la fonction d'arbitrage 8 appliquant par la fonction bas niveau 10 les pressions individuelles 12 sur les freins de roue 14.

La figure 2 présente un véhicule comportant un volant de direction 48 agissant sur une crémaillère transversale 50 comportant à chaque extrémité une biellette de direction 52 qui fait pivoter une roue avant 40, 42. Le véhicule avance à la vitesse V, qui forme un angle de dérive β avec son axe longitudinal. Chaque roue a une vitesse particulière

En l'absence de couple sur le volant 48 qui est lâché, on applique un freinage donnant une force longitudinale Fx2 sur la roue avant droite 42, Fx3 sur la roue arrière gauche 44 et Fx4 sur la roue arrière droite 46. Ces différentes forces longitudinales génèrent un moment de lacet Mz-frein sur le véhicule.

Le moment de lacet Mz-frein applique une force transversale sur chaque roue Fy1, Fy2, Fy3, Fy4.

Il résulte de la somme des différentes forces longitudinales Fx et transversales Fy sur les quatre roues du véhicule, une accélération angulaire de ce véhicule autour de son centre de gravité O. En multipliant le moment d'inertie du véhicule autour du centre de gravité O par l'accélération angulaire, et en ajoutant la vitesse angulaire donnée par le braquage des roues avant directrices 40, 42, on obtient la vitesse de lacet du véhicule Ψ' qui le fait pivoter.

En particulier le freinage des roues droite 42, 46 donne un moment de lacet Mz-frein qui fait pivoter le véhicule vers la droite, et le freinage des roues gauche 40, 44 donne un moment de lacet dans l'autre sens.

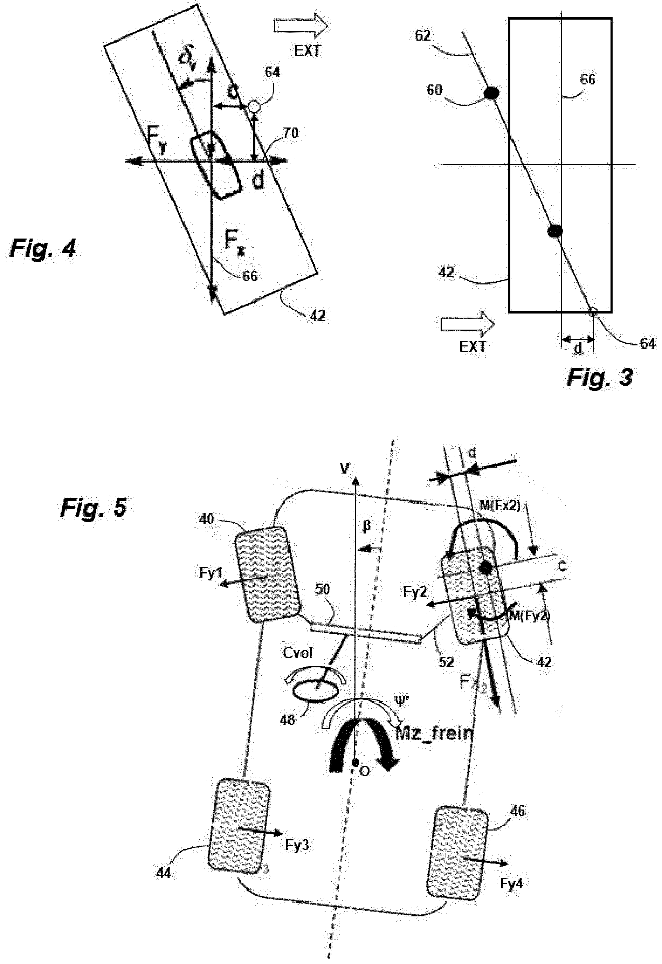

Les figures 3 et 4 présentent la roue avant droite 40 maintenue par deux rotules 60, définissant un axe de pivot incliné 62 passant par les centres de ces rotules, permettant un braquage de la roue δ. L'axe de pivot 62 comporte une géométrie présentant une inclinaison dans la direction transversale, ainsi que dans la direction longitudinale en formant l'angle de chasse.

Le bras de levier du déport latéral au sol d est la distance transversale entre le plan médian vertical 66 de la roue 40, et le point d'intersection au sol de l'axe de pivot 64. Le bras de levier latéral d est négatif si le plan médian de la route 66 est à l'intérieur par rapport au point d'intersection 64, comme présenté sur les schémas. Dans ce cas un freinage de la roue 40 donne une force longitudinale Fx vers l'arrière qui tend à braquer la direction de l'autre côté du véhicule.

Le bras de levier du déport longitudinal au sol c représentatif de la chasse au sol, est la distance longitudinale entre le plan axial vertical de la roue 70, et le point d'intersection au sol de l'axe de pivot 64. Ce bras de levier longitudinal c est positif si le point d'intersection 64 est devant le plan axial de la roue 70. Dans ce cas une force transversale Fy vers l'intérieur du véhicule, tend à braquer la direction de ce côté du véhicule.

Chaque bras de levier c, d multiplié par la force longitudinale Fx ou transversale Fy appliquée par la route sur la roue, génère un couple de rotation de cette roue autour de son axe de pivot 62 dans un sens ou dans l'autre.

On a alors lors des freinages individuels des roues mis en oeuvre par le système de contrôle de trajectoire 2, pour une roue avant 40, 42 un couple de rotation autour de l'axe de pivot 62 dépendant de la géométrie de la direction, des deux forces Fx, Fy appliquées sur cette roue et de l'angle de braquage de la roue δ. Ces couples de rotation génèrent une force transversale globale sur la crémaillère du boîtier de direction 50.

En retirant de la force transversale sur la crémaillère du boîtier de direction 50, les forces de frottement dans ce boîtier, et en prenant en compte le rayon du pignon de la crémaillère, on obtient un couple généré sur le volant Cvol.

L'action sur le boîtier de direction 50 des deux forces transversales donne une rotation du volant s'il est libre, et un braquage additionnel des roues avant 40, 42 dans un sens ou dans l'autre. Lors d'un contrôle de trajectoire du véhicule par le freinage individuel des roues, le braquage additionnel peut aller dans le sens du virage obtenu par le couple de lacet donné par le freinage des roues Mz-frein, ou au contraire s'opposer à ce sens.

Il est donc intéressant de connaître à l'avance la valeur de la rotation additionnelle du volant 48 résultant d'un certain freinage des différentes roues, pour ajuster ces freinages en fonction de cette rotation prévue, afin d'obtenir de manière rapide les meilleures valeurs. On notera que les différents frottements dans la direction s'opposant au mouvement, réduisent les effets des forces transversales appliquées sur le boîtier de direction 50, et la valeur du couple résultant sur le volant Cvol.

On améliore ainsi la réactivité du système de contrôle de trajectoire, comprenant une dynamique assez lente à cause notamment du temps de réponse des circuits hydrauliques, en évitant des boucles d'itérations de son fonctionnement qui demandent du temps, et peuvent apporter un risque de perte de contrôle complet de la trajectoire.

La figure 5 présente pour réaliser un moment de lacet Mz-frein qui tend à faire pivoter le véhicule vers la droite, le freinage de la roue avant droite 42 générant une force longitudinale sur cette roue Fx2.

La force longitudinale Fx2 et les forces transversales Fy1, Fy2 appliquées sur les roues avant génèrent en fonction des bras de levier c, d, un couple sur le volant Cvol qui peut tendre à braquer les roues dans le sens du virage ou dans le sens opposé.

En pratique on peut constater sur des véhicules de gamme supérieure une plage du déport transversal au sol d allant d'une valeur faiblement positive, environ 2mm, à une valeur fortement négative, environ -23mm, et une plage de la chasse au sol c comprise entre deux valeurs fortement positives, environ 24 et 27mm. On obtient avec ces véhicules un couple sur le volant Cvol dans une plage comprenant des valeurs positives et négatives.

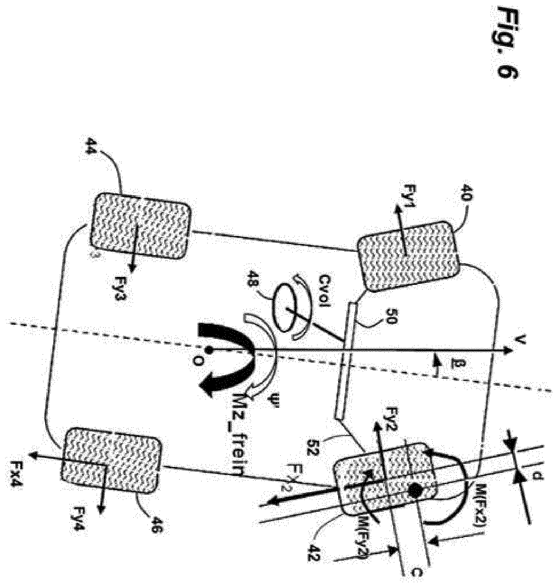

La figure 6 présente pour réaliser le même moment de lacet Mz-frein qui tend à faire pivoter le véhicule vers la droite, une répartition du freinage sur la roue avant droite 42 correspondant à un coefficient r du moment de lacet compris entre 0 et 1, et sur la roue arrière droite 46 correspondant au coefficient 1-r de ce moment de lacet. La somme des freinages des deux roues droite 40, 42 donne bien le moment de lacet complet Mz-frein.

Le freinage sur la roue arrière est limité en fonction de l'adhérence au sol afin d'éviter un dérapage de cette roue, le coefficient de répartition r ne peut pas être trop faible. En pratique avec une bonne adhérence de la route, le coefficient de répartition r n'est pas inférieur à environ 0,6.

Le freinage sur la roue avant droite 42 étant réduit, on obtient une force transversale appliquée sur la crémaillère de direction 50 qui est diminuée, et un couple sur le volant Cvol diminué aussi.

Le couple sur le volant Cvol entraîne une rotation du volant dans un sens présentant une amplitude dépendant de la valeur de ce couple, qui peut être mesurée notamment par le capteur d'angle volant 24.

Le procédé de contrôle de trajectoire suivant l'invention va utiliser cette particularité pour effectuer des tests permettant de connaître les effets de la géométrie de la direction sur le couple sur le volant Cvol, permettant d'anticiper un contrôle des freins en prenant en compte dès le départ ce couple afin d'obtenir plus rapidement les bonnes pressions de freinage sur chaque roue donnant la trajectoire souhaitée, avec un minimum de corrections.

Le procédé de contrôle de la trajectoire va aussi utiliser le couple généré sur le volant Cvol pour réaliser un braquage des roues avant s'ajoutant au couple de lacet donné par les freins, afin d'effectuer le virage demandé.

Différentes stratégies sont utilisables avec le procédé de contrôle selon l'invention, notamment pour des véhicules équipés de systèmes d'aide à la conduite, appelés aussi « ADAS » (Advanced Driver Assistance Systems), ou de systèmes de conduite autonome, dans le cas de défaillance d'un organe qui entraîne la nécessité d'assurer une trajectoire avec les freins du véhicule, en utilisant notamment une fonction de contrôle de stabilité du type « ESP ».

Ces stratégies permettent de prendre en compte les effets directs et réels sur la direction pour un véhicule dans l'état dans lequel il se trouve, quelles que soient les modifications apportées dans le passé à ce véhicule, pour obtenir au plus vite les bons ajustements des freinages donnant la trajectoire demandée.

On a pour toutes ces stratégies en premier un calcul du moment de lacet Mz-frein correspondant au virage à effectuer.

Une première stratégie calcule d'abord la consigne de pression à appliquer uniquement sur la roue avant intérieure du véhicule 42 pour obtenir le couple de lacet demandé Mz-frein, puis effectue ce freinage.

Si au cours du freinage la rotation du volant de direction est dans le sens du virage à effectuer, cette action est positive pour aider le véhicule a tourner, et on maintient alors la totalité de ce freinage de la roue avant intérieure 42. On réalise alors seulement un ajustement du couple de lacet demandé par les freins Mz-frein pour tenir compte de l'effet positif de la rotation du volant.

Si la rotation du volant de direction est dans le sens opposé au virage à effectuer, cette action est négative. On décide alors de baisser la pression sur la roue avant intérieure 42 de manière à réduire cet effet négatif, pour en transférer une partie sur la roue arrière intérieure 46 ce qui modifie l'effet sur la rotation du volant. La somme des freinages des deux roues intérieures 42, 46 est calculée pour obtenir le même couple de lacet demandé Mz-frein, en tenant compte d'une éventuelle rotation du volant.

On utilise ainsi des effets variés du freinage à l'avant ou arrière sur la rotation du volant de direction, pour utiliser ces effets en commençant par tester celui donné par le freinage avant.

En variante une deuxième stratégie calcule d'abord une consigne de pression constante qui sera maintenue pendant toute la régulation, à appliquer sur la roue arrière intérieure 46 pour obtenir une partie du couple de lacet demandé Mz-frein, puis effectue ce freinage.

En parallèle un niveau partiel de pression est appliqué sur la roue avant intérieure 42, de manière à obtenir avec le freinage de la roue arrière intérieure 46 au moins une partie du couple de lacet demandé Mz-frein. Si l'effet du freinage de la roue avant intérieure 42 est positif, donnant une rotation du volant dans le sens du virage, on augmente le freinage de cette roue avant pour obtenir la totalité du couple de lacet demandé Mz-frein, corrigé par l'effet de ce braquage.

Si l'effet du freinage sur la roue avant intérieure 42 est faiblement négatif, donnant une petite rotation progressive du volant dans le sens opposé au virage, on augmente aussi le freinage de cette roue avant pour obtenir la trajectoire, en corrigeant le couple de lacet demandé Mz-frein pour tenir compte de ce braquage progressif. Pratiquement on reste dans ce cas tant que la rotation du volant par rapport à sa position d'origine reste dans une limite, par exemple inférieure à 5°, ce qui permet d'ajuster progressivement le freinage en fonction de ce petit braquage contraire des roues.

Si l'effet du freinage de la roue avant intérieure 42 est fortement négatif, donnant une forte rotation du volant dans le sens opposé au virage, alors on bascule le freinage de cette roue avant intérieure vers la roue avant extérieure 46. On obtient l'effet inverse, avec une rotation du volant dans le sens du virage.

Ces différentes stratégies peuvent être appliquées systématiquement lors de chaque mise en oeuvre d'un contrôle de trajectoire par une action sur les freins de roue, permettant de prendre en compte l'état réel du véhicule à ce moment. Cet état peut être modifié en particulier lors de changement de roues avant, notamment pour monter des pneumatiques été ou hiver comprenant des jantes différentes, par exemple des jantes en tôle à la place de jantes en aluminium avec une géométrie différente.

Ces différentes stratégies peuvent aussi être appliquées périodiquement pour tester l'état du véhicule et la géométrie de sa direction, par exemple lors du roulage après un kilométrage parcouru, de manière automatique, ou après une demande du système au conducteur qui doit l'accepter afin d'être prévenu. Ce test peut aussi être effectué par un professionnel maîtrisant l'opération, par exemple lors du passage du véhicule en révision chez un concessionnaire.

On enregistre alors les résultats obtenus par ce test afin de les garder en mémoire, et de les utiliser dès la mise en oeuvre d'un contrôle de la trajectoire suivant, afin d'obtenir aussitôt les meilleures valeurs de contrôle des freins.

On notera que ce procédé de contrôle de la trajectoire nécessite seulement des compléments de logiciels dans un calculateur d'un système d'aide à la conduite, ce qui représente un coût réduit.

## Revendications

1. Procédé de contrôle de la trajectoire d'un véhicule automobile en l'absence de commande du volant de direction (48), utilisant un système d'aide à la conduite (2) effectuant un contrôle de la trajectoire à partir d'une action individuelle sur les freins de roue (14), calculant un moment de lacet (Mz-frein) à établir pour assurer la trajectoire du véhicule avec les freins, puis il applique un freinage de la roue avant intérieure au virage (42, 46), et **caractérisé en ce qu'**il constate l'effet de ce freinage sur la rotation du volant (48), afin d'établir ensuite le calcul du freinage de chaque roue assurant la trajectoire en prenant en compte la rotation du volant générée par ces freinages.

2. Procédé de contrôle selon la revendication 1, **caractérisé en ce qu'**il applique en premier un freinage de la roue avant intérieure au virage (42), donnant la totalité du moment de lacet demandé (Mz-frein), dans la limite de l'adhérence des roues.

3. Procédé de contrôle selon la revendication 2, **caractérisé en ce qu'**au cours du freinage de la roue avant intérieure (42) si la rotation du volant de direction (48) est dans le sens du virage à effectuer, alors il maintient sensiblement ce freinage, et si la rotation du volant est dans le sens opposé il réduit le freinage de la roue avant intérieure en transférant une partie de ce freinage sur la roue arrière intérieure (46).

4. Procédé de contrôle selon la revendication 1, **caractérisé en ce qu'**il applique en premier un freinage partiel maintenu constant pendant toute la régulation, de la roue arrière intérieure au virage (46), et en parallèle un niveau partiel de freinage de la roue avant intérieure (42), pour obtenir avec ces deux freinages au moins une partie du couple de lacet demandé (Mz-frein).

5. Procédé de contrôle selon la revendication 4, **caractérisé en ce qu'**au cours du freinage des deux roues intérieures (42, 46) si la rotation du volant de direction (48) est dans le sens du virage à effectuer, il augmente le freinage de la roue avant intérieure (42) pour obtenir la totalité du couple de lacet demandé (Mz-frein), et si la rotation du volant est dans le sens opposé au-dessus d'un seuil par rapport à sa position initiale, alors il bascule le freinage de cette roue avant intérieure vers la roue avant extérieure au virage (40).

6. Procédé de contrôle selon la revendication 5, **caractérisé en ce que** si la rotation du volant est dans le sens opposé au virage en dessous du seuil, il augmente le freinage de la roue avant intérieure (42) pour obtenir la trajectoire.

7. Procédé de contrôle selon l'une quelconque des revendications précédentes, **caractérisé en ce qu'**il enregistre dans une mémoire les valeurs de rotation du volant de direction (48) obtenues avec les différents freinages.

8. Véhicule automobile équipé de moyens mettant en oeuvre un procédé de contrôle de la trajectoire en l'absence de commande du volant de direction (48), utilisant un système d'aide à la conduite (2) effectuant un contrôle de la trajectoire à partir d'une action individuelle sur les freins de roue (14), **caractérisé en ce que** ce procédé de contrôle est selon l'une quelconque des revendications précédentes.

## Patentansprüche

1. Verfahren zur Bahnsteuerung eines Kraftfahrzeugs ohne Lenkradbedienung (48) unter Verwendung eines Fahrassistenzsystems (2), das eine Bahnsteuerung anhand einer individuellen Betätigung der Radbremsen (14) durchführt, wobei ein Giermoment (Mz-Bremse) berechnet wird, das für die Sicherstellung der Bahn des Fahrzeugs mit den Bremsen erzeugt werden muss, und dann das in der Kurve innen liegende Vorderrad (42, 46) gebremst wird, **dadurch gekennzeichnet, dass** es die Wirkung dieser Bremsung auf die Drehung des Lenkrades (48) erkennt, um dann die Bremsung jedes Rades, die die Bahn sicherstellt, unter Berücksichtigung der Drehung des Lenkrades, die durch diese Bremsvorgänge erzeugt wird, zu berechnen.

2. Steuerungsverfahren nach Anspruch 1, **dadurch gekennzeichnet, dass** zunächst das in der Kurve innen liegende Vorderrad (42) gebremst wird, wobei das gesamte erforderliche Giermoment (Mz-Bremse) innerhalb der Grenze der Radhaftung erzeugt wird.

3. Steuerungsverfahren nach Anspruch 2, **dadurch gekennzeichnet, dass** beim Bremsen des innen liegenden Vorderrads (42), wenn das Lenkrad (48) in Richtung der zu fahrenden Kurve gedreht wird, diese Bremsung im Wesentlichen beibehalten wird, und wenn das Lenkrad in die entgegengesetzte Richtung gedreht wird, die Bremsung des innen liegenden Vorderrads durch Übertragung eines Teils dieser Bremsung auf das innen liegende Hinterrad (46) verringert wird.

4. Steuerungsverfahren nach Anspruch 1, **dadurch gekennzeichnet, dass** es zunächst eine Teilbremsung des in der Kurve innen liegenden Hinterrads (46) durchführt, die während der gesamten Regelung konstant gehalten wird, und parallel dazu eine Teilbremsung des innen liegenden Vorderrads (42) durchführt, um durch diese beiden Bremsungen mindestens einen Teil des erforderlichen Giermoments (Mz-Bremse) zu erhalten.

5. Steuerungsverfahren nach Anspruch 4, **dadurch gekennzeichnet, dass** beim Bremsen der beiden innen liegenden Räder (42, 46), wenn das Lenkrad (48) in Richtung der zu fahrenden Kurve gedreht wird, die Bremsung des innen liegenden Vorderrads (42) erhöht wird, um das insgesamt erforderliche Giermoment (Mz-Bremse) zu erhalten, und wenn das Lenkrad in Bezug auf seine Ausgangsposition in die entgegengesetzte Richtung über eine Schwelle hinaus gedreht wird, die Bremsung dieses innen liegenden Vorderrads auf das in der Kurve außen liegende Vorderrad (40) verschoben wird.

6. Steuerungsverfahren nach Anspruch 5, **dadurch gekennzeichnet, dass** es, wenn die Drehung des Lenkrads in die der Kurve entgegengesetzte Richtung unterhalb der Schwelle liegt, die Bremsung des innen liegenden Vorderrads (42) erhöht, um die Bahn zu erhalten.

7. Steuerungsverfahren nach einem der vorstehenden Ansprüche, **dadurch gekennzeichnet, dass** es die mit den verschiedenen Bremsungen erhaltenen Drehwerte des Lenkrads (48) in einem Speicher speichert.

8. Kraftfahrzeug, das mit Mitteln ausgestattet ist, die in Ermangelung einer Bedienung des Lenkrads (48) ein Verfahren zur Bahnsteuerung durchführen, wobei ein Fahrassistenzsystem (2) verwendet wird, das eine Bahnsteuerung mittels einer einzelnen Betätigung der Radbremsen (14) durchführt, **dadurch gekennzeichnet, dass** dieses Steuerungsverfahren einem der vorstehenden Ansprüche entspricht.

## Claims

1. Method for controlling the trajectory of a motor vehicle without control of the steering wheel (48), using a driving assistance system (2) that controls the trajectory by acting directly on the wheel brakes (14), calculating a yaw moment (brake Mz) to be induced to control the vehicle trajectory with the brakes, before braking the inner front wheel when negotiating a bend (42, 46), and **characterised by** the fact that it considers the braking effect on the rotation of the steering wheel (48), and goes ahead to calculate the braking of each wheel controlling the trajectory by taking into account the steering rotation generated by the braking actions applied.

2. Method of control according to claim 1, **characterised by** the fact that it starts by braking the inner front wheel when negotiating a bend (42), thereby generating the full yaw moment needed (brake Mz), up to the maximum static friction force of the wheels.

3. Method of control according to claim 2, **characterised by** the fact that when braking the inner front wheel (42), if the rotation of the steering wheel (48) is directed towards the bend to be negotiated, the brakes will hold substantially, but if the steering wheel is rotated in the opposite direction, this reduces the braking of the inner front wheel by transferring some of the braking effect to the inner rear wheel (46).

4. Method of control according to claim 1, **characterised by** the fact that it starts by applying a partial braking that remains constant during the trajectory control, from the inner rear wheel when negotiating a bend (46), at the same time as a partial braking of the inner front wheel (42), thereby using both braking effects to obtain at least part of the yaw torque needed (brake Mz).

5. Method of control according to claim 4, **characterised by** the fact that when braking the two inner wheels (42, 46), if the rotation of the steering wheel (48) is directed towards the bend to be negotiated, it increases the braking of the inner front wheel (42), thereby generating the full yaw torque (brake Mz). But if the steering wheel is rotated in the opposite direction above a certain threshold compared with its initial position, it will then switch the braking of this inner front wheel to the outer front wheel when negotiating a bend (40).

6. Method of control according to claim 5, **characterised by** the fact that if the steering wheel is rotated in the opposite direction of the bend below the threshold, it increases the braking of the inner front wheel (42) to create the trajectory.

7. Method of control according to any of the previous claims, **characterised by** the fact that it records in a memory, the rotation values of the steering wheel (48) obtained with the different braking actions.

8. Motor vehicle equipped with means to apply a method for controlling the trajectory without control of the steering wheel (48), using a driving assistance system (2) that controls the trajectory by acting directly on the wheel brakes (14), **characterised by** the fact that this method of control is applicable according to any of the previous claims.
